# EUROPEAN PATENT SPECIFICATION

(11) **EP 2 578 397 B1**
(45) Date of publication and mention of the grant of the patent: **02.08.2017**
(21) Application number: 11792449.8
(22) Date of filing: 07.06.2011
(51) Int. Cl.: B32B 27/32, B32B 7/02, B32B 27/12, B32B 5/02, B32B 7/12, B32B 27/08, B32B 37/12, B32B 37/20

(54) **ANTISTATIC SHEET AND PRODUCTION METHOD THEREFOR**
ANTISTATISCHE FOLIE UND HERSTELLUNGSVERFAHREN DAFÜR
FEUILLE ANTISTATIQUE ET SON PROCÉDÉ DE PRODUCTION

(30) Priority: 07.06.2010 JP 2010130453
(43) Date of publication of application: 10.04.2013
(73) Proprietor: Hitachi Systems, Ltd., Tokyo 141-8672 (JP)
(72) Inventor: TAKAHASHI Jiro, Tokyo 141-8672 (JP); AOYAMA Hirohide, Tokyo 141-8672 (JP); ITO Yasuhiro, Tokyo 141-8672 (JP); AKIYAMA Hirofumi, Tokyo 141-8672 (JP)
(74) Representative: Addiss, John William
(86) International application number: PCT/JP2011/063052
(87) International publication number: WO 2011/155492

(56) References cited:
- EP-A2- 0 372 363
- WO-A1-00/73058
- WO-A1-91/02643
- WO-A1-2008/098136
- JP-A- 59 209 316
- JP-A- 61 206 641
- JP-A- 2002 127 307
- JP-A- 2004 017 456
- JP-U- H03 057 145
- US-A1- 2004 051 082

## Description

### FIELD OF THE INVENTION

The present invention relates to an antistatic sheet and a manufacturing method thereof, and specifically, an antistatic sheet related to an antistatic mat to be laid on a floor and the like during maintenance or repair operations of electronic components or the like.

### BACKGROUND ART

During operations related to handling electronic components, it is necessary to protect the electric component from static electricity. However, mere sheets or mats conventionally used were not satisfying for this purpose. Therefore, an expensive antistatic mat equipped with a means (function) with electrically-conductive material impregnated therein, for example as is shown in Non-Patent Document 1, such as an electrically-conductive table mat, was normally used.

As is shown in Non-Patent Documents 1 through 3, many mats have been commercially available; however, unit price per one mat was expensive. Therefore, when such mats have to be used in large volumes, such as in a maintenance service company of machines, antistatic mats (sheets) having a moderate price and expected to have an effect either equaling or surpassing the conventional mats are desired.

However, when such mats are to be used as protective sheets on which the electronic components or the like are temporarily placed and operated, the sheets must be superior in anti-fouling property, cushion property, lightweight property, handling property, durability and the like, in addition to having an antistatic function and a neutralization function. Further, in many cases, the sheets are laid on the floor to be operated thereon, so that it is necessary to prevent transition of static electricity from the floor side.

Patent Document 1 (Japanese Patent Laid-Open No. 2001-310383) discloses a technique related to "a manufacturing method of a film-non-woven fabric complex sheet characterized in melting and spinning a non-woven fabric made of thermoplastic fiber, superposing the non-woven fabric and a thermoplastic resin film within 30 minutes from spinning, and stretching the same, and the film-non-woven fabric complex sheet manufactured by the method", aimed at providing a complex sheet of film and non-woven fabric and a manufacturing method thereof, which is capable of achieving stable film-forming and quality.

Patent Document 2 (Japanese Patent Laid-Open No. 2010-47857) discloses a technique related to "a short-fiber non-woven fabric consisting primarily of high-functional fiber and having a weight of 100 to 3000g/m², characterized in that the non-woven fabric has a puncture resistance value of 100 to 1000g, a compression rate of 15 to 50%, and an air permeability of 0.1 to 30 cm³/cm²/sec", aimed at providing the same as a protective non-woven fabric in glass factories and the like, because it has superior characteristics in anti-puncture resistance value, bulk property, and anti-air permeability.

Patent Document 3 (Japanese Patent Laid-Open No. 2007-39852) discloses a technique related to "an antielectric fiber cloth in which an antistatic composition including a polymer and/or polyamine resin of a quaternary ammonium salt type, a thermal reaction type blocked urethane having 2 or more block isocyanate group per one molecule, a surfactant having oleyl and two or more hydroxyl group, is applied to a fabric cloth", aimed at providing an antielectric fiber cloth having superior wash resistance while preventing hardening of texture and the like, and having no need of a special device.

### CITATION LIST

### Patent Document

[Patent Document 1] Japanese Patent Application Laid-Open No. 2001-310383
[Patent Document 2] Japanese Patent Application Laid-Open No. 2010-47857
[Patent Document 3] Japanese Patent Application Laid-Open No. 2007-39852

### Non-Patent Document

[Non-Patent Document 1] http://www.mmm.co.jp/electrical/static/mat/lineup.html#f_9600
[Non-Patent Document 2] http://www.achilles.jp/product/03/01/04/01/index.html
[Non-Patent Document 3] http://www.sigma-koki.com/pdf/jp/C090609.pdf

EP 0 372 363 A2 discloses a printable paper substitute that is composed of a laminated sheet having a central layer of nonwoven spunbonded polypropylene and outer layers of pigmented polypropylene. The outer layers are capable of delamination to provide evidence of tampering.

WO 00/73058 A1 discloses a moisture vapor permeable, substantially liquid impermeable composite sheet material that includes a powder-bonded nonwoven web adhered to a moisture vapor permeable thermoplastic film. The nonwoven web includes a first layer comprised primarily of fibers that are compatible with an adhesive used to bond the web, and a second layer comprised of a blend of fibers, some of which are compatible with, and some of which are incompatible with the bonding adhesive and the thermoplastic film. It also discloses a method for making the composite sheet material and an item of apparel made from the sheet material.

US 2004/051082 A1 discloses a static dissipative textile having an electrically conductive surface achieved by coating the textile with an electrically conductive coating in a variety of patterns. The electrically conductive coating is comprised of a conducting agent and a binding agent, and optionally a dispersing agent and/or a thickening agent. The static dissipative textile generally comprises a fabric which may be screen printed or otherwise coated with a conductive coating on the backside of the fabric so that the conductive coating does not interfere with the appearance of the face of the fabric. The economically produced fabric is described as exhibiting relatively permanent static dissipation properties and conducting electric charge at virtually any humidity, while the conductive coating is said to not detrimentally affect the overall appearance or tactile properties of the fabric. Also disclosed is a method for producing a static dissipative textile having an electrically conductive surface.

WO 91/02643 A1 discloses a multilayer laminate that comprises: a substrate layer of fibrous material; an intermediate layer of polymeric material which is free of anti-static material and is extrusion laminated to the substrate layer; and an outer layer of polyethylene containing anti-static material and including low density polyethylene and linear low density polyethylene, which is coextruded with and extrusion laminated to the intermediate layer. Also disclosed is an appertaining process for making a multilayer laminate. The laminate is described as having particular utility in the fabrication of protective garment articles, for use in applications involving exposure to flammable or explosive environmental constituents which are susceptible to ignition by static discharge.

WO2008098136 discloses a static dissipative textile comprising: a) a non-woven fabric and an electrically conductive coating applied to both surfaces of the fabric, wherein the electrically conductive coating is comprised of a conducting agent and a binding agent.

Still further, the present invention aims at providing a manufacturing method of the antistatic sheet superior in the neutralization function or the antistatic function.

At sites handling electronic devices (personal computers, servers, facsimiles, printers, security devices, measurement instruments, banking terminal devices, various vending machines and the like) or components thereof, it is necessary to temporary store the parts when performing maintenance/checking, repairing and the like of the respective parts. In doing so, conventionally, a temporary storage area of parts has been provided by laying a mat on a floor and the like. The present invention aims at providing a sheet to be used for protecting the parts temporarily stored from static electricity (neutralization function or antistatic effect), fouling (antifouling property), and moisture (water-absorbing property) and the like, and which has durability and good handling property.

More specifically, the present invention aims at providing an antistatic sheet having a superior neutralization function or the antistatic function and which is moderately priced. Further, the present invention aims at providing a manufacturing method of the configuration and the like of the antistatic sheet having a superior neutralization function or antistatic function.

### MEANS FOR SOLVING THE PROBLEMS

According to a first aspect of the present invention there is provided an antistatic sheet-like product according to claim 1.

According to a second aspect of the present invention there is provided a manufacturing method of an antistatic sheet-like product according to claim 3.

### EFFECT OF THE INVENTION

With the configuration explained above, the present invention provides an antistatic sheet capable of exerting the neutralization effect and the antistatic effect of electronic devices.

Further, the present invention provides an antistatic sheet exerting superior effect in anti-fouling property, cushion property, lightweight property, handling property, durability and the like, in addition to the neutralization effect and the antistatic effect.

A general electrically-conductive mat conventionally used has a thickness of about 2 mm and about 3 kg/m², however, the antistatic sheet of the present invention is capable of achieving a thickness of about 0.2mm and about 80g/m². Further, the same can be provided inexpensively.

Further, the present invention is capable of manufacturing the antistatic sheet equipped with the neutralization function and the antistatic function easily.

### BRIEF DESCRIPTION OF THE DRAWINGS

Fig. 1(A) and Fig. 1(B) are cross-sectional views of sheet-like products that are useful for understanding the invention;
Fig. 1(C) is a cross-sectional view of an antistatic sheet-like product that is an embodiment of the present invention;
Fig. 2 shows a manufacturing process diagram for the sheet-like product shown in Fig. 1(A);
Fig. 3 shows a manufacturing process diagram for the sheet-like product shown in Fig. 1(B);
Fig. 4 shows a manufacturing process diagram for a first process of manufacturing an antistatic sheet-like product that is an embodiment of the present invention; and
Fig. 5 shows a manufacturing process diagram for a second process of manufacturing an antistatic sheet-like product that is an embodiment of the present invention.

### BEST MODE FOR CARRYING OUT THE INVENTION

The present invention provides an antistatic sheet which is light, superior in handling capability, has durability and is inexpensive. An embodiment provides a polyethylene sheet laminated on a non-woven fabric sheet, wherein a print is laminated to a whole upper surface of the non-woven fabric sheet, an electrically-conductive paint layer is formed on the printed surface, and an antistatic polyethylene sheet is laminated at a lower surface of the polyethylene sheet.

Considering a case where operation is performed while placing electric components on a floor, it is said that an electrical resistance value is practically in antistatic region from 8th power of ten to 14th power of ten Q. However, practically, it is preferable that the value falls within the range of 7th power of ten to 10th power of ten Q. In this case, practical problems hardly arise. In the case where a sheet is laid on a floor and operation is performed thereon, tools, new components, and old components and the like will be placed on the sheet. There are many cases in which the parts are charged with static electricity. Especially, there are cases in which new parts are damaged by the static electricity charged to the old parts. What should not be overlooked is the point that, because the operation is performed on the sheet laid on the floor, depending on the material of the floor and the like, the static electricity from the floor may be the cause of damage. Further, the parts may receive influence from the static electricity charged to the human body.

In order to accurately achieve the effect with respect to such various static electricity, the embodiment explained below is most preferred. An antistatic function is given to both surfaces of the sheet. A static electricity interrupting layer is configured from a non-woven fabric. As a countermeasure against static electricity, easiness of flow of static electricity becomes a problem. The easiness of flow of static electricity is ranked in order of antistatic property, antielectric property, conductive property, and current-carrying property.

For example, in order to prevent transition of the static electricity from the floor surface, a sheet subjected to antistatic treatment is laminated on the surface contacting the floor surface. In this case, a thickness of the laminate sheet is preferably around 30 to 60µm. With the aim of saving cost for production, a commercially-available PE sheet, PP sheet or PET sheet and the like may be used.

In any embodiment, the non-woven fabric used constitutes a static electricity interrupting layer. From the viewpoint of cushion property, folding property and durability, a non-woven fabric with the weight of about 40 to 100g/m² is appropriate. However, the thickness may be varied according to need. Commercially-available materials exert no problem. However, it is widely known that static electricity is hardly generated when humidity is high. Therefore, materials having some hygroscopic ability are preferred. For example, a pulp non-woven fabric and a polyester non-woven fabric are preferred.

In order to prevent scuffing, and to obtain uniformity of conductive paint, solid printing on the entire surface of the upper surface of the non-woven fabric is implemented. Also, from the viewpoint of design, a colour printing and the like may be implemented thereon. Subsequently, the electrically-conductive paint is coated on the whole surface of the printed surface. The purpose of the entire surface printing is to enhance the effect of the conductive polymer. By applying the conductive polymer after the entire surface printing on the upper surface of the non-woven fabric, the consumed quantity of the conductive polymer decreases greatly. In any event, the entire surface printing of the non-woven fabric is a novel idea in the printing field.

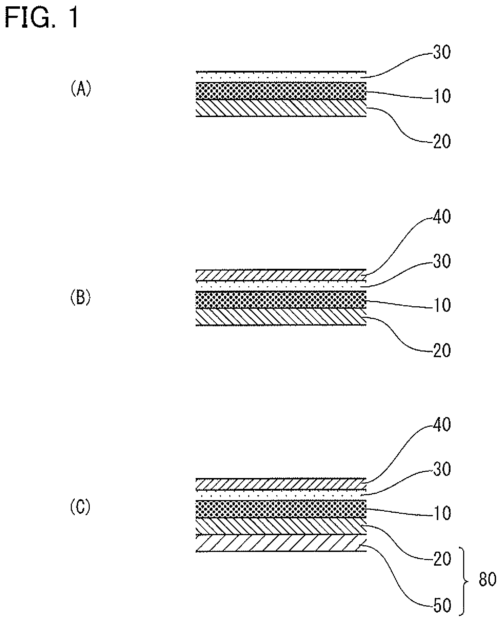

Hereinafter, an embodiment of the present invention is described with reference to the drawings. Figs. 1(A) and Fig. 1(B) shows sheet-like structures that are not embodiments but which are useful for understanding the invention. Fig. 1(C) shows an embodiment of the invention. The drawings illustrate the product in a usage state, where the product is used by spreading the same on a floor and the like, so that the side used facing up is illustrated as the upper surface, and the side contacting the floor and the like is illustrated as the bottom surface. Therefore, in the present invention, the word "upper surface" means an upper side in the illustrated state, and "bottom surface" means a lower side in the illustrated state.

Fig. 1(A) shows a sheet-like product in which a polyethylene sheet 20 (hereinafter referred to as PE sheet) or a polypropylene sheet 20 (hereinafter referred to as PP sheet) is laminated on a bottom surface of a non-woven fabric sheet 10, and an entire surface printing surface 30 is implemented to an upper surface of the non-woven fabric sheet.

It is preferable that the thickness of the non-woven fabric sheet 10 is around 40 to 100µm, the thickness of the PE sheet 20 is around 30 to 60µm, and a print film of the entire surface printing of the upper surface of the non-woven fabric sheet 10 is around 1 to 10µm. The entire surface printing of the non-woven fabric is a novel idea in a field of printing.

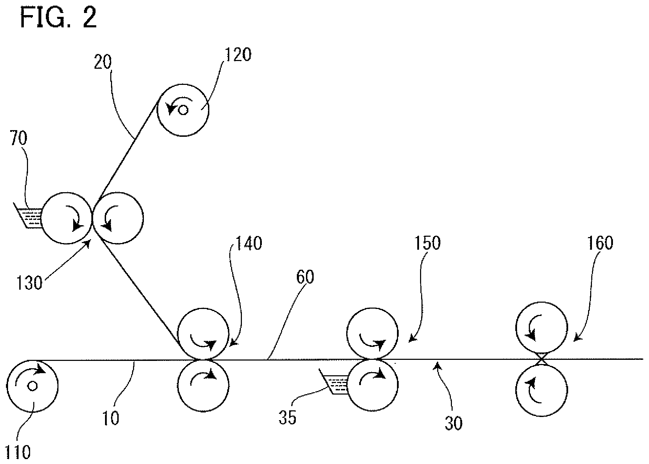

A specific manufacturing method of this antistatic sheet is shown in Fig. 2. A specific explanation will be given with reference to Fig. 2.

The non-woven fabric sheet 10 is unwound from a non-woven fabric sheet roll 110, and is supplied to the process. On the other hand, the PE sheet or the PP sheet 20 is unwound from a PE sheet roll or a PP sheet roll 120 and is supplied to the process. To a surface of the PE sheet or the PP sheet 20, an adhesive 70 is applied from an adhesive application roll 130. Thereafter, the non-woven fabric sheet 10 and the PE sheet or the PP sheet 20 are introduced into a laminating roll 140, press-bonded and laminated therein. Thereafter, a laminated sheet 60 is introduced into a printing roll 150, and a surface on the non-woven fabric sheet 10 side of the laminated sheet 60 is entirely printed (an ink tank 35), so that the entire surface printing surface 30 is formed. Thereafter, the laminated sheet 60 with the surface on the non-woven fabric sheet 10 side entirely printed is introduced into a cutting roll 160, and is cut into a predetermined shape.

Fig. 1(B) shows a sheet-like product in which the PE sheet 20 or the PP sheet 20 is laminated on the bottom surface of the non-woven fabric sheet 10, the entire surface printing surface 30 is implemented to the upper surface of the non-woven fabric sheet, and an electrically-conductive paint is applied to the upper surface of the printed surface (an electrically-conductive paint surface 40).

It is preferable that the thickness of the non-woven fabric sheet 10 is around 40 to 100µm, the thickness of the PE sheet 20 is around 30 to 60µm, a print film of the entire surface of the upper surface of the non-woven fabric sheet 10 is around 1 to 10µm, and an application thickness of the electrically-conductive paint is around 0.1 to 10µm. The entire surface printing of the non-woven fabric is a novel idea in a field of printing. Further, in the case of forming the electrically-conductive paint surface 40 by applying the electrically-conductive paint after entire surface printing of the non-woven fabric, the consumed quantity of the electrically-conductive paint is dramatically small.

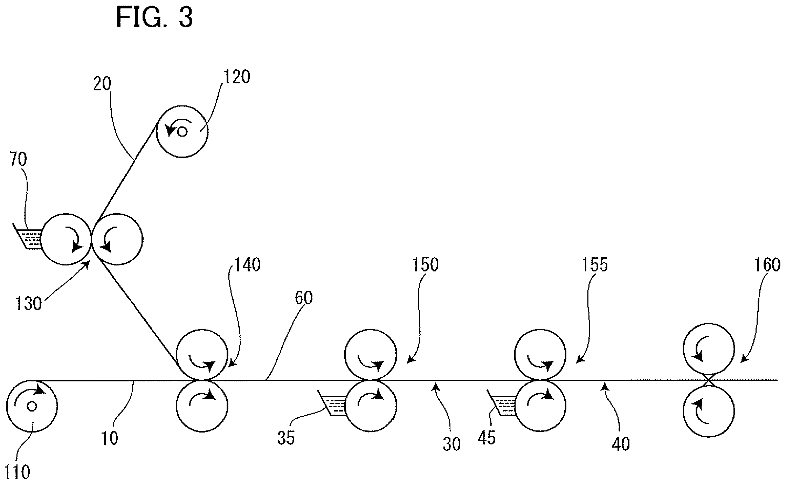

A specific manufacturing method of this antistatic sheet is shown in Fig. 3. Hereinafter, the method will be specifically explained with reference to Fig. 3. Portions that correspond with similar portions in Fig. 2 will be explained using identical reference numbers.

Similar to the process shown in Fig. 2, the non-woven fabric sheet 10 is unwound from the non-woven fabric sheet roll 110, and is supplied to the process. On the other hand, the PE sheet or the PP sheet 20 is unwound from the PE sheet roll or the PP sheet roll 120 and is supplied to the process. To the surface of the PE sheet or the PP sheet 20, the adhesive 70 is applied from the adhesive application roll 130. Thereafter, the non-woven fabric sheet 10 and the PE sheet or the PP sheet 20 are introduced into the laminating roll 140, press-bonded and laminated therein. Thereafter, the laminated sheet 60 is introduced into the printing roll 150, and the surface on the non-woven fabric sheet 10 side of the laminated sheet 60 is entirely printed (the ink tank 35), so that the entire surface printing surface 30 is formed. Thereafter, the laminated sheet 60 with the non-woven fabric sheet 10 side surface entirely printed is introduced into an electrically-conductive paint application roll 155, an electrically-conductive paint (an electrically-conductive paint tank 45) is applied to the entire surface printing surface, so that the electrically-conductive paint surface 40 is formed. Thereafter, the laminated sheet 60 is introduced into the cutting roll 160, and is cut into a predetermined shape.

In the antistatic sheet of Fig. 1(B), the electrically-conductive paint surface 40 as the conductive layer is provided only on the surface thereof. As such, in the case where the electronic component or the like is placed on the antistatic sheet, the static electricity charged to the electronic component or the like is rapidly neutralized.

### Embodiment

An embodiment of the present invention is shown in Fig. 1(C), and comprises a sheet-like product in which the PE sheet 20 or the PP sheet 20 is laminated on the bottom surface of the non-woven fabric sheet 10, the entire surface printing surface 30 is implemented to the upper surface of the non-woven fabric sheet, the electrically-conductive paint is applied to the upper surface of the printed surface (the electrically-conductive paint surface 40), and an antistatic PE sheet 50 is laminated on the bottom surface of the PE sheet 20 or the PP sheet 20.

In the embodiment, the sheet-like product may, in place of laminating the PE sheet 20 or the PP sheet 20 to the lower surface of the non-woven fabric sheet 10 and then laminating the antistatic PE sheet 50 to the lower surface thereof, laminate an antistatic laminated PE sheet 80, which is obtained by laminating the antistatic PE sheet 50 to the lower surface of the PE sheet 20 or the PP sheet 20, to the lower surface of the non-woven fabric sheet 10.

It is preferable that the thickness of the non-woven fabric sheet 10 is around 40 to 100µm, the thickness of the antistatic PE sheet 50 is around 20 to 60µm, the thickness of the print film of the whole surface of the upper surface of the non-woven fabric sheet 10 is around 1 to 10µm, and an application thickness of the electrically-conductive paint is around 0.1 to 10µm. The thickness of the PE sheet 20 alone may be, as is in the second embodiment, 30 to 60µm.

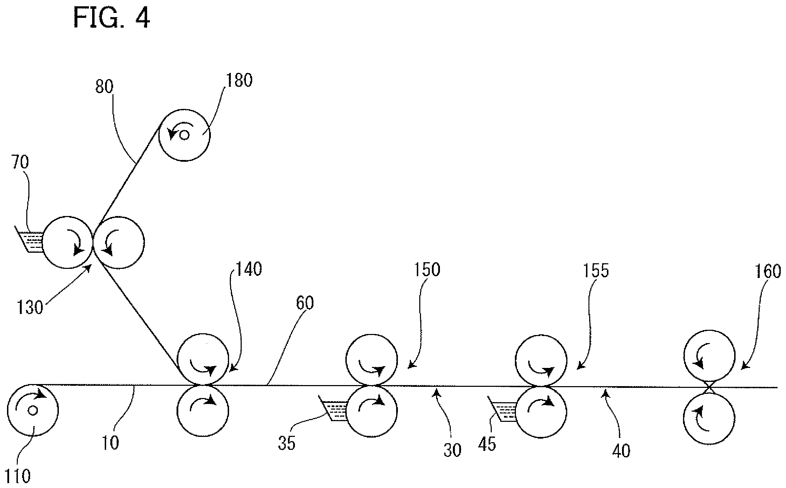

A specific manufacturing method of the antistatic sheet of the embodiment is shown in Fig. 4. Hereinafter, the method will be specifically explained with reference to Fig. 4. In the embodiment, similar portions with the corresponding portions in Figs. 2 and 3 will be explained using identical reference numbers.

Similar to Figs. 2 and 3, the non-woven fabric sheet 10 is unwound from the non-woven fabric sheet roll 110, and is supplied to the process. On the other hand, the antistatic laminated PE sheet 80 is unwound from an antistatic laminated PE sheet roll 180 and is supplied to the process. To the surface of the antistatic laminated PE sheet 80, the adhesive 70 is applied by the adhesive application roll 130. Thereafter, the non-woven fabric sheet 10 and the antistatic laminated PE sheet 80 are introduced into the laminating roll 140, press-bonded and laminated therein. Thereafter, the laminated sheet 60 is introduced into the printing roll 150, and the surface on the non-woven fabric sheet 10 side of the laminated sheet 60 is entirely printed (the ink tank 35), so that the entire surface printing surface 30 is formed. Thereafter, the laminated sheet 60 with the non-woven fabric sheet 10 side surface entirely printed is introduced into the electrically-conductive paint application roll 155, the electrically-conductive paint (the electrically-conductive paint tank 45) is applied to the entire surface printing surface, so that the electrically-conductive paint surface 40 is formed. Thereafter, the laminated sheet 60 is introduced into the cutting roll 160, and is cut into a predetermined shape.

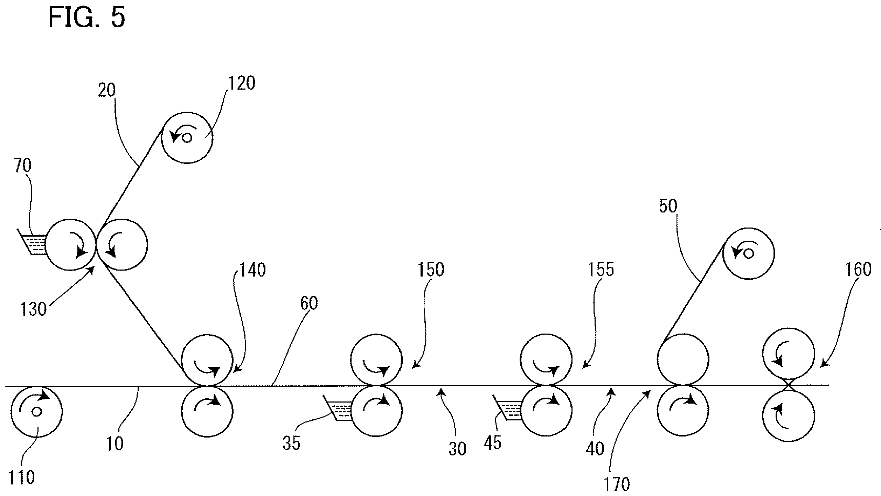

In the specific manufacturing method (Fig. 4) of the antistatic sheet of the embodiment, an example using the antistatic laminated PE sheet 80 in which the antistatic PE sheet 50 is laminated on the lower surface of the PE sheet 20 or the PP sheet 20 is shown. Another embodiment of a different process of laminating the antistatic PE sheet 50 to the lower surface of the PE sheet 20 or the PP sheet 20 is shown in Fig. 5. In this embodiment, similar portions with the corresponding portions in Figs. 2 and 3 will be explained using identical reference numbers.

Similar to Figs. 2 and 3, the non-woven fabric sheet 10 is unwound from the non-woven fabric sheet roll 110, and is supplied to the process. On the other hand, the PE sheet or the PP sheet 20 is unwound from the PE sheet roll or the PP sheet roll 120 and is supplied to the process. To the surface of the PE sheet or the PP sheet 20, the adhesive 70 is applied by the adhesive application roll 130. Thereafter, the non-woven fabric sheet 10 and the PE sheet or the PP sheet 20 are introduced into the laminating roll 140, press-bonded and laminated therein. Thereafter, the laminated sheet 60 is introduced into the printing roll 150, and the surface on the non-woven fabric sheet 10 side of the laminated sheet 60 is entirely printed (the ink tank 35), so that the entire surface printing surface 30 is formed. Thereafter, the laminated sheet 60 with the non-woven fabric sheet 10 side entirely printed is introduced into the electrically-conductive paint application roll 155, the electrically-conductive paint (the electrically-conductive paint tank 45) is applied to the entire surface printing surface, so that the electrically-conductive paint surface 40 is formed. Thereafter, the laminated sheet 60 is introduced into a laminating roll 170, and the antistatic PE sheet 50 is laminated on the side of the PE sheet 20 or the PP sheet 20. Thereafter, the laminated sheet 60 is introduced into the cutting roll 160, and is cut into a predetermined shape.

As is explained above, in the embodiment, the electrically-conductive paint surface 40 having the highest (easier to flow the static electricity) conductivity in the order of easiness of flowing the static electricity is formed to the upper surface (the surface on which the electronic component or the like charged with the static electricity is placed) of the non-woven fabric which functions as the static electricity interrupting layer, and the antistatic PE sheet 50 with antistatic ability lower in the order is formed to the lower surface on the opposite side (the surface contacting the floor). By doing so, the neutralization of the static electricity of the electronic component or the like placed on the antistatic sheet of the present invention is performed promptly, and the transition of the static electricity from the floor may be inhibited.

As the antistatic agent used in the embodiment of the present invention, it is preferable to use an antistatic polymer paint manufactured by Shin-Etsu Polymer Co., Ltd., or an antistatic agent manufactured by Nissan Chemical Industries, Ltd. or Marubishi Oil Chemical Co., Ltd.

The following experiment had been conducted to verify the effect with the antistatic sheet of the present invention. As the object of the experiment, (1) non-woven fabric/PE sheet (with antistatic agent), and (2) non-woven fabric/PE sheet (without antistatic agent), were used, and as the material for charging the static electricity, (3) nylon 100%, (4) polyethylene 100%, and (5) bubble sheet, were used.

First, in order to study a charge amount of the static electricity of (1) through (5) mentioned above, a value measured as an initial value 1 is measured by rubbing a friction cloth of 100% rayon 20 times in a horizontal direction against test pieces of (1) to (5) above by manpower, and then measuring the static electricity. Measurement was performed using a surface potential measurement instrument STATIRON TYPE-TL, a tuning fork vibrator type, manufactured by Shishido Electrostatic, Co., Ltd, as a measuring instrument. The measurement distance was 50 mm.

As a result, the initial values 1 of the static electricity of the above-mentioned test pieces were as follows (unit: V).

| | |
|---|---|
| (1) Non-woven fabric/PE sheet (with antistatic agent) non-woven fabric surface: 0, PE surface: | -10 |
| (2) Non-woven fabric/PE sheet (without antistatic agent) non-woven fabric surface: 0, PE surface: | -100 |
| (3) Nylon 100% | -5,000 |
| (4) Polyethylene 100% | -8,000 |
| (5) Bubble sheet | -7,000 |

Next, in order to verify the neutralization effect of (1) and (2) above, the static electricity were charged to the test pieces of (3) to (5) above by rubbing the friction cloth of 100% rayon 20 times in the horizontal direction, then the test pieces were placed on (1) non-woven fabric/PE sheet (with antistatic agent), and (2) non-woven fabric/PE sheet (without antistatic agent), and the change in the static electricity were measured.

First, the neutralization effect in the case where the charged test piece was placed was measured, and thereafter, the static electricity of each test piece was measured after removing the test piece. The results are shown in Table 1. According thereto, it is proven that the neutralization effect when an object charged with static electricity is placed thereon is extremely high in both (1) non-woven fabric/PE sheet (with antistatic agent) and (2) non-woven fabric/PE sheet (without antistatic agent), and it is proven that the static electricity charged is reduced to approximately half the value when the object is removed therefrom.

**[Table 1]**

| | Non-woven fabric/PE sheet (with antistatic agent) | | Non-woven fabric/PE sheet (without antistatic agent) | |
|---|---|---|---|---|
| | Placed | Removed | Placed | Removed |
| Nylon 100% | -100 | -2,500 | -200 | -4,000 |
| Polyethylene 100% | -200 | -3,000 | -200 | -5,000 |
| Bubble sheet | -3,000 | -3,500 | -3,000 | -5,000 |

From the present experiment, the following was proven.
(1) There was hardly any charging in the non-woven fabric/PE laminate material.
(2) In the case where the antistatic agent was applied to the non-woven fabric surface of the non-woven fabric/PE laminate material with a technique of solid printing, there was also an effect on the PE surface on the rear side.
(3) There is a neutralization effect when a material easily charged and storing electricity, such as PE and nylon, is attached to the non-woven fabric/PE laminate material, and the effect is increased when the antistatic agent was applied to the non-woven fabric surface with a technique of solid printing.
(4) As is explained above, in the third embodiment in which solid printing of the antistatic agent is performed on the non-woven fabric, and the PE laminate material for antistatic is used, it becomes possible to achieve extremely high antistatic effect and neutralization effect without fail.

### EXPLANATION OF REFERENCES

- 10: Non-woven fabric
- 20: PE sheet (PP sheet)
- 30: Printing layer
- 40: Electrically-conductive paint layer
- 50: Antistatic PE sheet
- 80: Antistatic laminated PE sheet

## Claims

1. An antistatic sheet-like product used as a working sheet to be laid on a floor when placing an electric component on the floor to work thereon, the antistatic sheet-like product comprising:
a non-woven fabric sheet (10);
an entire surface printed layer (30) implemented to the whole of an upper surface of the non-woven fabric sheet (10); and
an electrically-conductive paint layer (40) applied to an upper surface of the entire surface printed layer (30);
**characterized in that** the antistatic sheet-like product comprises:
a polyethylene sheet or a polypropylene sheet (20) laminated on a bottom surface of the non-woven fabric sheet (10); and
an antistatic polyethylene sheet layer (50) laminated on a bottom surface of the polyethylene sheet or the polypropylene sheet (20) laminated on the bottom surface of the non-woven fabric sheet (10), so that an antistatic effect is obtained also from a bottom surface for contacting the floor.

2. The antistatic sheet-like product according to claim 1, wherein:
a thickness of the non-woven fabric sheet (10) is 40 - 100 µm;
the sheet (20) laminated on the bottom surface of the non-woven fabric sheet (10) is a polyethylene sheet (20), and a thickness of the polyethylene sheet (20) is 30 - 60 µm;
a thickness of the entire surface printed layer (30) on the upper surface of the non-woven fabric sheet (10) is 1 - 10 µm;
a thickness of the electrically-conductive paint layer (40) applied to the upper surface of the entire surface printed layer (30) is 0.1 - 10 µm; and
a thickness of the antistatic polyethylene sheet layer (50) for contacting the floor is 20 - 60 µm.

3. A manufacturing method of an antistatic sheet-like product used as a working sheet to be laid on a floor when placing an electric component on the floor to work thereon, the manufacturing method comprising:
implementing entire surface printing (30) to an upper surface of a non-woven fabric sheet (10); and
applying an electrically-conductive paint (40) to the whole of an upper surface of the entire surface printed layer (30);
**characterized in that** the method comprises:
laminating a polyethylene sheet or a polypropylene sheet (20) on a bottom surface of the non-woven fabric sheet (10); and
laminating an antistatic polyethylene sheet (50) having an antistatic effect on the bottom surface of the polyethylene sheet or the polypropylene sheet (20) so that an antistatic effect is obtained also from a bottom surface for contacting the floor.

4. The manufacturing method of an antistatic sheet-like product according to claim 3, wherein
a thickness of the non-woven fabric sheet (10) is 40 - 100 µm;
the sheet (20) laminated on the bottom surface of the non-woven fabric sheet (10) is a polyethylene sheet, and a thickness of the polyethylene sheet is 30 - 60 µm;
a thickness of the entire surface printed layer (30) on the upper surface of the non-woven fabric sheet (10) is 1 - 10 µm;
a thickness of the electrically-conductive paint layer (40) applied to the upper surface of the entire surface printed layer (30) is 0.1 - 10 µm; and
a thickness of the antistatic polyethylene sheet layer (50) for contacting the floor is 20 - 60 µm.

## Patentansprüche

1. Ein antistatisches, folienartiges Produkt zur Verwendung als Arbeitsunterlage zum Auflegen auf einen Boden wenn ein elektrisches Bauteil auf dem Boden gelegt werden soll, um daran zu arbeiten, wobei das antistatische, folienartige Produkt umfasst:
- eine Vliesstofflage (10);
- eine auf die gesamte Fläche aufgedruckte Schicht (30), die auf die gesamte Oberseite der Vliesstofflage (10) aufgebracht ist; und
- eine elektrisch nicht leitfähige Farbschicht (40), die auf die gesamte Oberseite der auf die gesamte Fläche aufgedruckten Schicht (30) aufgebracht ist;
**dadurch gekennzeichnet, dass** das antistatische folienartige Produkt umfasst:
- eine Polyethylenfolie oder eine Polypropylenfolie (20), die auf die Unterseite der Vliesstofflage (10) auflaminiert ist, und
- eine antistatische Polyethylenfolienschicht (50), die auf die Unterseite der Polyethylenfolie oder der Polypropylenfolie (20) auflaminiert ist, die auf die Unterseite der Vliesstofflage (10) auflaminiert ist, so dass auch von der Unterseite zum Kontakt mit dem Boden eine antistatische Wirkung erreicht wird.

2. Antistatisches, folienartiges Produkt nach Anspruch 1, wobei:
- eine Dicke der Vliesstofflage (10) 40 - 100 µm beträgt;
- die auf die Unterseite der Vliesstofflage (10) auflaminierte Folie (20) eine Polyethylenfolie ist und eine Dicke der Polyethylenfolie (20) 30 - 60 µm beträgt;
- eine Dicke der auf die gesamte Fläche aufgedruckte Schicht (30) auf der gesamten Oberseite der Vliesstofflage (10) 1 - 10 µm beträgt;
- eine Dicke der elektrisch nicht leitfähigen Farbschicht (40), die auf die gesamte Oberseite der auf die gesamte Fläche aufgedruckten Schicht (30) aufgebracht ist, 0.1 - 10 µm beträgt; und
- eine Dicke der antistatischen Polyethylenfolienschicht (50), zum Kontakt mit dem Boden 20 - 60 µm beträgt.

3. Herstellungsverfahren für ein antistatisches, folienartiges Produkt zur Verwendung als Arbeitsunterlage zum Auflegen auf einen Boden wenn ein elektrisches Bauteil auf dem Boden gelegt werden soll, um daran zu arbeiten, wobei das Herstellungsverfahren umfasst:
- Aufbringen einer eine auf eine gesamte Fläche aufgedruckten Schicht (30) auf eine Oberseite einer Vliesstofflage (10); und
- Aufbringen einer elektrisch nicht leitfähigen Farbschicht (40) auf die gesamte Oberseite der auf die gesamte Fläche aufgedruckten Schicht (30);
**dadurch gekennzeichnet, dass** das Herstellungsverfahren umfasst:
- Auflaminieren einer Polyethylenfolie oder einer Polypropylenfolie (20) auf die Unterseite der Vliesstofflage (10), und
- Auflaminieren einer antistatischen Polyethylenfolienschicht (50) mit antistatischer Wirkung auf die Unterseite der Polyethylenfolie oder der Polypropylenfolie (20), so dass auch von der Unterseite zum Kontakt mit dem Boden eine antistatische Wirkung erreicht wird.

4. Herstellungsverfahren für ein antistatisches, folienartiges Produkt nach Anspruch 3, wobei:
- eine Dicke der Vliesstofflage (10) 40 - 100 µm beträgt;
- die auf die Unterseite der Vliesstofflage (10) auflaminierte Folie (20) eine Polyethylenfolie ist und eine Dicke der Polyethylenfolie (20) 30 - 60 µm beträgt;
- eine Dicke der auf die gesamte Fläche aufgedruckte Schicht (30) auf der gesamten Oberseite der Vliesstofflage (10) 1 - 10 µm beträgt;
- eine Dicke der elektrisch nicht leitfähigen Farbschicht (40), die auf die gesamte Oberseite der auf die gesamte Fläche aufgedruckten Schicht (30) aufgebracht ist, 0.1 - 10 µm beträgt; und
- eine Dicke der antistatischen Polyethylenfolienschicht (50) zum Kontakt mit dem Boden 20 - 60 µm beträgt.

## Revendications

1. Produit analogue à une feuille antistatique utilisé comme une feuille de travail destinée à être posée sur un sol lors du placement d'un composant électrique sur le sol afin de travailler sur celui-ci, le produit analogue à une feuille antistatique comportant :
une feuille de tissu non-tissé (10),
une couche imprimée sur toute la surface (30) mise en oeuvre sur la totalité d'une surface supérieure de la feuille de tissu non-tissé (10), et
une couche de peinture électriquement conductrice (40) appliquée sur une surface supérieure de la couche imprimée sur toute la surface (30),
**caractérisé en ce que** le produit analogue à une feuille antistatique comporte :
une feuille de polyéthylène ou une feuille de polypropylène (20) laminée sur une surface inférieure de la feuille de tissu non-tissé (10), et
une couche de feuille de polyéthylène antistatique (50) laminée sur une surface inférieure de la feuille de polyéthylène ou de la feuille de polypropylène (20) laminée sur la surface inférieure de la feuille de tissu non-tissé (10), de sorte qu'un effet antistatique est obtenu également à partir d'une surface inférieure destinée à venir en contact avec le sol.

2. Produit analogue à une feuille antistatique selon la revendication 1, dans lequel :
une épaisseur de la feuille de tissu non-tissé (10) est comprise entre 40 et 100 µm,
la feuille (20) laminée sur la surface inférieure de la feuille de tissu non-tissé (10) est une feuille de polyéthylène (20), et une épaisseur de la feuille de polyéthylène (20) est comprise entre 30 et 60 µm,
une épaisseur de la couche imprimée sur toute la surface (30) sur la surface supérieure de la feuille de tissu non-tissé (10) est comprise entre 1 et 10 µm,
une épaisseur de la couche de peinture électriquement conductrice (40) appliquée sur la surface supérieure de la couche imprimée sur toute la surface (30) est comprise entre 0,1 et 10 µm, et
une épaisseur de la couche de feuille de polyéthylène antistatique (50) destinée à venir en contact avec le sol est comprise entre 20 et 60 µm.

3. Procédé de fabrication d'un produit analogue à une feuille antistatique utilisé comme une feuille de travail destinée à être posée sur un sol lors du placement d'un composant électrique sur le sol afin de travailler sur celui-ci, le procédé de fabrication comportant :
la mise en oeuvre d'une impression sur toute la surface (30) sur une surface supérieure d'une feuille de tissu non-tissé (10), et
l'application d'une peinture électriquement conductrice (40) sur l'ensemble d'une surface supérieure de la couche imprimée sur toute la surface (30),
**caractérisé en ce que** le procédé comporte :
le laminage d'une feuille de polyéthylène ou d'une feuille de polypropylène (20) sur une surface inférieure de la feuille de tissu non-tissé (10), et
le laminage d'une feuille de polyéthylène antistatique (50) ayant un effet antistatique sur la surface inférieure de la feuille de polyéthylène ou de la feuille de polypropylène (20) de sorte qu'un effet antistatique est obtenu également à partir d'une surface inférieure destinée à venir en contact avec le sol.

4. Procédé de fabrication d'un produit analogue à une feuille antistatique selon la revendication 3, dans lequel
une épaisseur de la feuille de tissu non-tissé (10) est comprise entre 40 et 100 µm,
la feuille (20) laminée sur la surface inférieure de la feuille de tissu non-tissé (10) est une feuille de polyéthylène, et une épaisseur de la feuille de polyéthylène est comprise entre 30 et 60 µm,
une épaisseur de la couche imprimée sur toute la surface (30) sur la surface supérieure de la feuille de tissu non-tissé (10) est comprise entre 1 et 10 µm,
une épaisseur de la couche de peinture électriquement conductrice (40) appliquée sur la surface supérieure de la couche imprimée sur toute la surface (30) est comprise entre 0,1 et 10 µm, et
une épaisseur de la couche de feuille de polyéthylène antistatique (50) destinée à venir en contact avec le sol est comprise entre 20 et 60 µm.
